# EUROPEAN PATENT SPECIFICATION

(11) **EP 1 919 982 B1**
(45) Date of publication and mention of the grant of the patent: **14.03.2012**
(21) Application number: 06774133.0
(22) Date of filing: 26.06.2006
(51) Int. Cl.: C08J 3/28, C09D 4/00, C09D 175/16

(54) **RADIATION CURABLE CLEARCOAT REPAIR SYSTEM AND METHOD FOR OBTAINING FILM BUILD IN THIN FILM AREAS USING THE SYSTEM**
STRAHLENHÄRTBARES KLARLACKREPARATURSYSTEM UND VERFAHREN ZUM ERHALT VON FILMBILDUNG IN DÜNNFILMBEREICHEN UNTER VERWENDUNG DES SYSTEMS
SYSTEME DE REPARATION A BASE D ENDUIT LUSTRE DURCISSABLE PAR RADIATIONS ET PROCEDE D OBTENTION DE FILMS DANS DES ZONES DE FILMS MINCES UTILISANT LEDIT SYSTEME

(30) Priority: 31.08.2005 US 216302
(43) Date of publication of application: 14.05.2008
(73) Proprietor: BASF CORPORATION, Wyandotte, MI 48192 (US)
(72) Inventor: BRAUN, David, Whitehouse, OH 43571 (US); ODAJIMA, Michelle, Toledo, OH 43614 (US); KEMPF, Hans, Swanton, OH 43558 (US)
(74) Representative: Leifert & Steffan
(86) International application number: PCT/US2006/025049
(87) International publication number: WO 2007/027286

(56) References cited:
- WO-A-02/20680
- WO-A-02/28938
- WO-A-98/40171
- WO-A-2004/090057
- WO-A-2006/097385
- WO-A-2006/097386
- US-A1- 2005 096 427
- "Thermische Analyse UserCom 18", INTERNET CITATION, 1 February 2003 (2003-02-01), pages 1-20, XP007912927, Retrieved from the Internet: URL:http://de.mt.com/global/de/home/suppor tive_content/usercom/TA_UserCom 18.z2vUzxjPy0vKAxrVCMLHBfbHCI45nZa0nG--.TA _UserCom18.MediaFileCompone nt.html/tauserc18d.pdf [retrieved on 2010-05-04]

## Description

### Field of the Invention

The present invention relates to a radiation curable clearcoat repair system and a method for obtaining film build in a coating repair process using the coating repair system cured with ultraviolet radiation.

### Background of the Invention

In the area of automotive repair, where minor damage needs attention, it is often desirable to keep the area of repair small. Rather than repainting the entire panel, the minor damage is preferably remedied with the aid of techniques for very small-scale automotive refinish, also referred to as spot repair.

Spot repair entails cleaning and sanding the damage site, optionally filling the damage site with filler composition, followed by drying or curing the filler, optionally additional sanding and cleaning, applying basecoat and clearcoat compositions, followed by application of the spot blender composition and curing the applied compositions.

The traditional spot repair techniques are directed to one component (1 K) and two component (2K) coatings that are air dried or cured with radiant heat. These techniques, however, have numerous disadvantages and are difficult to carry out. In many cases overspray zones of the repair clearcoat spray mist on the original finish are too wide, making the visual matching of refinish and original finish difficult. Moreover, the repair clearcoat may break away or tear due to poor adhesion of the refinish clearcoat to the original finish in the overspray zones around the damage site. This may produce clearly visible edges around the refinish clearcoat. WO-A-02/20680 teaches spot repair sets comprising blender components which are not curable by ultraviolet radiation.

In clearcoats cured by ultraviolet (UV) radiation, problems are often encountered in the thin film blend areas caused by incomplete cure due to oxygen inhibition of the free-radical curing reaction mechanism. In a very thin film, the oxygen inhibition is worse because oxygen can diffuse through the entire film, resulting in a runout area that is not completely cured, has lower crosslink density and gives a hazy appearance when polished.

It is desirable to remedy the oxygen inhibition problem in the runout area. It would be desirable to provide a novel binder solution suitable as a spot blender for automotive spot repair that cures by UV radiation. The method of the present invention overcomes lack of cure that results in the thin film blend areas (runout zones) caused in part by oxygen inhibition of the crosslinking reaction of the clearcoat. The method utilizes a spot, blender that ensures a short cure time as well as a high level of process reliability, good flowout and excellent thin films in transition zones of the refinish clearcoat that cure rapidly with UV radiation.

### Summary of the Invention

The present invention comprises a spot blender component curable with ultraviolet radiation. The invention comprises a clearcoat repair system comprising a clearcoat component and a spot blender component that is curable with ultraviolet radiation. The invention also comprises a method for repair of a coating composition. The method results in the improved cure of a repair coating cured by ultraviolet radiation. The method of the invention is particularly useful to improve the cure of thin blend areas of clearcoat repair that are cured by ultraviolet radiation. The method of the present invention utilizes a repair coating system comprising the ultraviolet curable blender component and may also include a clearcoat component used together with the blender component where both are cured with ultraviolet radiation.

The blender component comprises at least a radiation curable component and initiator. When the blender is used in a clearcoat repair system, the ultraviolet curable clearcoat and ultraviolet curable blender each comprise at least a radiation curable component and initiator.

The process of the invention comprises the steps of cleaning the damage site and the surrounding area, if desired filling, sanding and again cleaning the damage site, applying a filler and flashing off the resultant filler film, or alternatively curing the filler film and sanding and cleaning the resultant filler coat, applying a basecoat material to the filler film or filler coat, flashing off the resultant basecoat film, and removing any overspray, applying a clearcoat material wet-on-wet to the basecoat film, applying a spot blender solution, and curing the applied films with ultraviolet radiation.

"A" and "an" as used herein indicate "at least one" of the item is present; a plurality of such items may be present, when possible. "About" when applied to values indicates that the calculation or the measurement allows some slight imprecision in the value (with some approach to exactness in the value; approximately or reasonably close to the value; nearly). If, for some reason, the imprecision provided by "about" is not otherwise understood in the art with this ordinary meaning, then "about" as used herein indicates a possible variation of up to 5% in the value. As used throughout, ranges are used as shorthand for describing each and every value that is within the range. Any value within the range can be selected as the terminus of the range. When used, the phrase "at least one of" refers to the selection of any one member individually or any combination of the members. The conjunction "and" or "or" can be used in the list of members, but the "at least one of" phrase is the controlling language. For example, at least one of A, B, and C is shorthand for A alone, B alone, C alone, A and B, B and C, A and C, or A and B and C.

### Detailed Description of the Invention

The invention relates to a refinish repair coating system cured by ultraviolet radiation. The coating system comprises an ultraviolet curable clearcoat component and a blender component. The clearcoat component and blender include at least one radiation curable component, together with initiator and optionally coatings additives.

The present invention optionally includes in the clearcoat and/or blender components, a radiation curable component selected from monomeric compounds that contain bonds activatable by ultraviolet radiation or a mixture of any combination of such compounds. Compounds of this kind are low molecular mass components that generally derive substantially from only one basic structure or monomeric unit.

The present invention includes in the clearcoat and optionally in the blender component, a radiation curable component that is selected from oligomeric or polymeric compounds that contain bonds activatable by ultraviolet radiation or a mixture of any combination of such compounds. The oligomeric component is a compound containing in general on average from 2 to 15 basic structures or monomer units. A polymer, in contrast, is a compound containing in general on average at least 10 basic structures or monomer units. Such compounds may also be referred to as binders or resins.

Examples of bonds activatable by ultraviolet radiation are carbon-hydrogen single bonds or carbon-carbon, carbon-oxygen, carbon-nitrogen, carbon-phosphorus or carbon-silicon, single or double bonds. Of these, the double bonds are preferred, with the carbon-carbon double bonds being most preferred.

Highly suitable carbon-carbon double bonds are present, for example, in (meth)acrylate, ethacrylate, crotonate, cinnamate, vinyl ether, vinyl ester, ethenylarylene, dicyclopentadienyl, norbomenyl, isoprenyl, isopropenyl, allyl or butenyl groups; ethenylarylene ether, dicyclopentadienyl ether, norbornenyl ether, isoprenyl ether, isopropenyl ether, allyl ether or butenyl ether groups; or ethenylarylene ester, dicyclopentadienyl ester, norbornenyl ester; isoprenyl ester, isopropenyl ester, allyl ester or butenyl ester groups. Of these, (meth)acrylate groups are preferred, with acrylate groups being most preferred.

The clearcoat component of the invention may optionally include (a1) a monomeric radiation curable compound that comprises from one to six free-radically polymerizable groups on average per molecule. Compound (a1) may be present up to 50% by weight, based on total weight of the clearcoat component. In another embodiment, compound (a1) is present in an amount between 0.5 and 50% by weight, based on total weight of the clearcoat component.

The clearcoat includes a radiation curable compound (a2) that comprises an oligomer or polymer having a number average molecular weight of from about 500 to 50,000. Compound (a2) is present in an amount between 30% and 99.9% by weight. In an alternative embodiment, compound (a2) is present in an amount between 30% and 80% by weight, where all weights are based on total clearcoat component weight. The clearcoat component further comprises (a3) from 0.1 to 10 % by weight of one or more photoinitiators; (a4) up to 69.9% by weight of volatile organic solvent and; (a5) from 0.1 to 20% by weight customary coatings additives. It is to be noted that all ranges specified throughout the application include each and every value within that range.

The blender component of the present invention may optionally include (b1) a monomeric radiation curable compound that comprises from one to six free-radically polymerizable groups on average per molecule. Compound (b1) may be present in an amount up to 5.0% by weight, based on total weight of the blender component. Alternatively, compound (b1) is present in an amount between 0.5 and 5.0% by weight, based on total blender weight.

The blender may optionally include a radiation curable compound (b2) that comprises an oligomer or polymer having a number average molecular weight of from 500 to 50,000. Compound (b2) is present in an amount of from 0.5 to 20% by weight, based on total weight of the blender component.

The blender component comprises (b3) from 0.1 to 5.0 % by weight of one or more photoinitiators; (b4) from 24.5% to 98.9% by weight of volatile organic solvent and; (b5) from 0.1 to 2.0% by weight coatings additives.

The blender may optionally include a component (b6) which is nitrocellulose. The component (b6) may be present in an amount up to 3.0 % by weight. In one embodiment, component (b6) is present in an amount between 0.01 and 2% by weight. In an alternative embodiment, component (b6) is present in an amount between 0.1 and 3.0% by weight.

All weights for the blender components are based on total blender composition weight. It is to be noted that all ranges specified throughout the application include each and every value within that range.

In general, the type and level of compounds (a1) and (b1) are chosen to impart hardness, fast cure and higher solids. The choice and level of compounds (a2) and (b2) are chosen to provide flexibility, adhesion and higher solids, as well as sandability and polishability. Preferably the ethylenically unsaturated groups in compounds (a1), (b1), (a2) and (b2) are principally acrylate groups as these provide a rapid cure rate. Compounds (a1) and (b1) may be the same or different. Compounds (a2) and (b2) may be the same or different.

Examples of compounds suitable as compounds (a1) and (b1) include monoacrylate monomers such as octyl-decyl monoacrylate, isobornyl monoacrylate and isodecyl monoacrylate, diacrylate monomers such as hexanediol diacrylate or tripropyleneglycol diacrylate, triacrylates such as trimethylolpropane triacrylate, alkoxylated trimethylolpropane triacrylate or pentaerythritol triacrylate. Other useful functionalized acrylates include pentaerythritol tetraacrylate, pentaerythritol pentaacrylate or dipentaerythritol hexaacrylate. Mixtures of any of the above may also be utilized.

Examples of oligomers and/or polymers useful as compounds (a2) and (b2) in the present invention include compounds selected from the group consisting of urethane acrylates and methacrylates, polyester acrylates and methacrylates, acrylic, melamine, acrylic amine, cellulose based acrylates and methacrylates and unsaturated polyesters and mixtures thereof. Urethane acrylates include, but are not limited to compounds such as Ebecryl 8402, Ebecryl 5129, or Ebecryl 1290 and Ebecryl 8301, available from UCB chemicals or Actilane 251, Actilane 270, Actilane 276 and Actilane 280 available from Akcros Chemicals or CN 292 from Sartomer Company. In one embodiment compounds (a2) and/or (b2) comprise one or more urethane (meth)acrylates.

The radiation curable compounds (a1), (b1), (a2) and (b2) are preferably free from aromatic structural units.

The photoinitiator compounds used as (a3) and (b3) may be the same or different. Preferred photoinitiators (a3) and (b3) are acyl phosphine oxides; for example Irgacure 819, available from Ciba Specialty Chemicals or Lucirin TPO or Lucirin TPO-L available from BASF Corp., benziketals such as Irgacure 651 from Ciba Specialty Chemicals, alpha-hydroxy ketones such as Irgaure 184 or Darocur 1173 available from Ciba Specialty Chemicals or mixtures thereof. Other suitable photoinitiators include Irgacure® 1800 and Irgacure® 500 from Ciba Geigy, Genocure® MBF from Rahn.

The volatile organic solvent compounds (a4) and (b4) can be any solvent that will dissolve all other components in the clearcoat composition. It can be an aliphatic or aromatic hydrocarbon such as Solvesso® 100(TM) solvent or Oxsol® 100 solvent, toluene or xylene, an alcohol such as n-butanol, sec-butanol, or isopropanol, an ester such as methyl acetate, n-propyl acetate, iso-butyl acetate, n-butyl acetate, ethyl acetate, ethyl propionate, n-butyl propionate, or n-pentyl propionate, a ketone such as acetone, methyl isobutyl ketone, methyl ethyl ketone, methyl.amyl ketone, methyl isoamyl ketone, or methyl n-propyl ketone, an ether, an ether-alcohol or an ether-ester such as ethyl 3-ethoxypropionate, propylene glycol methyl ether, propylene glycol ethyl ether, propylene glycol n-propyl ether or propylene glycol t-butyl ether, propylene glycol methyl ether acetate or a mixture of any of these. Compounds used as solvents for (a4) and (b4) can be the same or different. The level and type of solvents used will depend on the viscosity of the other components and the intended application method.

The clearcoat and/or blender components may also optionally contain thermally curable components such as compounds containing reactive hydrogen groups including polymers such as acrylic, polyester, polyurethane polymers or copolymers of these, or where the reactive hydrogen group is a hydroxyl, amino, thiol, epoxy or carboxy functionality. These are included together with a crosslinking compound which reacts with the reactive hydrogen group-containing functionality. Such compounds include polyisocyanates, aminoplasts, acid functional compounds, and epoxy functional compounds, and are selected to react with the hydrogen group-containing compound. The clearcoat may also optionally include cellulose acetoacetate esters, for example, cellulose acetobutyrate. Where these components are present, the coating may be cured by thermal means, including but not limited to, radiant and infrared heath

Suitable isocyanate compounds include polyisocyanates which are aliphatic, including cycloaliphatic polyisocyanates, or aromatic. Useful aliphatic polyisocyanates include aliphatic diisocyanates such as ethylene diisocyanate, 1,2-diisocyanatopropane, 1,3-diisocyanatopropane, 1,6-diisocyanatohexane, 1,4-butylene diisocyanate, lysine diisocyanate, hexamethylene diisocyanate (HDI), 1,4-methylene bis-(cyclohexylisocyanate) and isophorone diisocyanate. Useful aromatic diisocyanates include the various isomers of toluene diisocyanate, meta-xylenediioscyanate and para-xylenediisocyanate, also 4-chloro-1,3-phenylene diisocyanate, 1,5-tetrahydro-naphthalene diisocyanate, 4,4'-dibenzyl diisocyanate and 1,2,4-benzene triisocyanate can be used. In addition, the various isomers of α,α,α',α'-tetramethyl xylene diisocyanate can be used. The isocyanate is generally included in unblocked form.

The clearcoat and/or blender may also optionally include conventional coatings additives (a5) and (b5) for the clearcoat and blender respectively. These additives include photosynergists, ultraviolet absorbers, hindered amine light stabilizers, adhesion promoters, flow aids, wetting aids and rheology modifiers.

The present invention further relates to a method of repairing an automotive coating composition comprising:
(i) cleaning the damage site and its surroundings,
(ii) sanding and re-cleaning the damage site,
(iii) optionally, conducting additional steps of filling, sanding and cleaning the damage site,
(iv) applying a filler and/or primer and flashing off the resultant filler film, or alternatively curing the filler film and sanding and cleaning the resultant filler coat,
(v) applying a basecoat material to the filler film or filler coat, flashing off the resultant basecoat film, and removing any overspray,
(vi) applying a clearcoat material as.described above, wet-on-wet to the basecoat film,
(vii) applying a spot blender of the composition described above, and
(viii) curing the applied films with ultraviolet radiation.

For the process of the invention it is essential that the basecoat material is applied by pneumatic application with a spray gun from the outside, i.e. from the original finish, inward, i.e. toward the center of the damage site, for maximum hiding. It is essential that the spot blender used comprises the solution of the invention described in detail above.

Pneumatic application of the coating materials may be with any known spray gun. It may be advantageous to use smaller spray guns than the customary and known spray guns. Small-size spray guns of this kind are available from the company SATA, Kornwestheim, under the tradename SATA minijet 2 NR-2000.

For the cleaning and sanding it is possible to use the cleaning equipment and cleaning fluids and the sanding and/or polishing equipment that is normally used for automotive refinishing.

If filling is desired, it is possible to employ known fillers used in the industry. A primer may also be applied. For example, two-component urethane primers comprising a first component comprising a polyisocyanate and a second component comprising a polyol. Each of the components may further comprise additional ingredients such as solvents, pigments, coloring agents, adhesion promoters, resins, crosslinking agents, fillers, driers, corrosion inhibitors, rheology control agents, mar/slip additives, wetting agents, dispersing agents, light stabilizers, pH adjusting agents, catalysts, photoinitiators and photosynergysts, and flow control additives. Examples of other suitable primers include one component waterborne primers comprising acrylic and/or polyurethane dispersions and one component UV curable primers comprising UV activatable crosslinking compound.

Suitable primers include standard commercial products such as Glasurit^{®} 76-71 one component waterborne primer-surfacer, Glasurit^{®} 151-70 UV -light activated primer-filler, R-M^{®} DP20 2 component urethane primer, and R-M^{®} VP126 flash fill UV primer-surfacer, all available from BASF Corporation. Glasurit is a registered trademark of BASF AG.

The basecoat materials are standard commercial products which are sold, for example, by the company BASF and include products such as waterborne basecoat such as Glasurit^{®} 90-Line available from BASF Corporation or a solvent-borne basecoat such as Glasurit^{®} 55-Line and R-M Diamont®, available from BASF Corporation.

The curing of the applied clearcoat and blender components is done by application of ultraviolet radiation with wavelengths of from 200 to 500 nm. The radiation is supplied by lamps emitting the desired radiation wavelength. Filters may be used and distance of the lamp may be adjusted to effect the desired curing.

The process of the invention is particularly suitable for the spot repair of damaged areas up to 3 cm in diameter. Spot repair on vertical surfaces is particularly advisable. In the case of horizontal surfaces, the process of the invention is advantageously employed in the vicinity of edges (distance up to 15 cm). The process of the invention makes it possible to improve cure in low film build areas of ultraviolet radiation curable repair clearcoat compositions.

### EXAMPLES

**Ex. 1A and 1B- Spot Blender Components and Comparative**

| **Component** | **Comparative** | **Blender 1 A** | **Blender 1 B** |
|---|---|---|---|
| | **(Glasurit® 352-500 Spot Blender)** | | |
| Ingredient | Parts by weight | Parts by weight | Parts by weight |
| n-butyl acetate | 39.00 | 38.22 | 38.88 |
| 1-methoxypropyl 2-acetate | 38.77 | 37.99 | 38.66 |
| Xylene | 19.50 | 19.11 | 19.44 |
| denatured ethanol | 0.20 | 0.20 | --- |
| Baysilon® OL 44¹ | 0.03 | 0.03 | 0.03 |
| 65% solids hydroxyl-functional methacrylate copolymer solution in Solvesso® 100 (Glasurit® Racing Clear 923-144) | 2.50 | 2.45 | --- |
| Lucirin® TPO-L² | ---- | 2.00 | 1.98 |
| Ebecryl 8301³ | ---- | ---- | 1.01 |
| Total | 100 | 100 | 100 |

| | | | |
|---|---|---|---|
| ¹Baysilon® OL 44 is a polysiloxane flow additive from Borchers. ²Lucirin® TPO-L is a free-radical photoinitiator from BASF ³Ebeeryl 8301 is an aliphatic urethane oligomer from UCB | | | |

The ingredients of each of the above spot blenders were charged to a container and mixed well until homogeneous.

**Example 1 C - Ultraviolet Curable 1K Clearcoat Component**

| Ingredients | Parts by weight |
|---|---|
| n-butyl acetate | 25.01 |
| 10% solution of Byk-325¹ in n-butyl acetate | 1.52 |
| 10% solution of Byk-358² in n-butyl acetate | 2.74 |
| 10% solution of TEGO Glide 410³ in n-butyl acetate | 0.30 |
| 30% solution of Irgacure® 184⁴ /Irgacure® 819⁵ at a 5/1 ratio in n-butyl acetate | 8.11 |
| Tinuvin® 292⁶ | 0.61 |
| Tinuvin® 400⁷ | 0.92 |
| SR399⁸ | 20.26 |
| Ebecryl 8402⁹ | 20.26 |
| Experimental oligomer¹⁰ | 20.26 |
| Total | 100 |

| | |
|---|---|
| ¹Byk 325 is a polysiloxane flow additive from Byk-Chemie. ²Byk 358 is a polyacrylic flow additive from Byk-Chemie. ³TEGO Glide 410 is a polysiloxane flow additive from Degussa. ⁴Irgacure® 184 is free-radical photoinitiator from Ciba Specialty Chemicals. ⁵Irgacure® 819 is free-radical photoinitiator from Ciba Specialty Chemicals. ⁶Tinuvin® 292 is a hindered amine light stabilizer from Ciba Specialty Chemicals. ⁷Tinuvin® 400 is a ultraviolet absorber from Ciba Specialty Chemicals. ⁸SR 399 is a penta-functional monomer from Sartomer. ⁹Ebecryl 8402 is an aliphatic urethane diacrylate oligomer from UCB. ¹⁰Experimental oligomer is an aliphatic urethane acrylate from UCB. | |

The clearcoat ingredients were charged to a container and mixed well until homogeneous.

### Polishing evaluation

The following procedure was carried out to demonstrate the polishability of the thin film blend area: Old, cured clearcoated test panels were prepped by polishing with 3M.Perfect-It™ III Rubbing Compound and a 3M Perfect-It™ Plus Foam Compounding Pad followed by cleaning with RM® 900 Pre-Kleeno.
The 1K UV curable clearcoat of Example 1C was then applied to three separate panels using a SATA minijet NR 2000 gravity-feed spraygun, fading out into the panel. The spot blender components were then each applied to one of the panels over the fade-out zone using a SATA minijet NR 2000. This was followed by curing with a Panacol UV-F 450 ultraviolet lamp for four minutes at a distance of ten inches from the lamp.
The cured clearcoat was then polished using 3M Perfect-It™ III Rubbing Compound and a 3M Perfect-It™ Plus Foam Compounding Pad. The fade-out zone was then evaluated for peel-back and clarity. The results are set forth in Table 1.

**Table 1**

| **Results After Polishing** | | |
|---|---|---|
| Spot Blender of Comparative | Spot Blender of Ex. 1A | Spot Blender of Ex. 1B |
| Heavy peel back | No peel-back | No peel back |
| Heavy haze | Moderate Haze | Very slight haze |

### Example 2

| **Master Solution** | |
|---|---|
| Ingredients | Parts by weight |
| Byk 325¹ | 0.34 |
| Byk 358² | 0.61 |
| Sec-Butanol | 90.09 |
| TEGO Glide 410³ | 0.18 |
| Irgacure® 184⁴ | 4.50 |
| Irgacure® 819⁵ | 0.90 |
| Tinuvin® 292⁶ | 1.35 |
| Tinuvin® 400⁷ | 2.03 |
| Total | 100.00 |

| | |
|---|---|
| ¹Byk 325 is a polysiloxane flow additive from Byk-Chemie. ²Byk 358 is a polyacrylic flow additive from Byk-Chemie. ³TEGO Glide 410 is a polysiloxane flow additive from Degussa. ⁴Irgacure® 184 is free-radical photoinitiator from Ciba Specialty Chemicals. ⁵Irgacure® 819 is free-radical photoinitiator from Ciba Specialty Chemicals. ⁶Tinuvin® 292 is a hindered amine light stabilizer from Ciba Specialty Chemicals. ⁷Tinuvin® 400 is a ultraviolet absorber from Ciba Specialty Chemicals. | |

The master solution ingredients of were charged to a container and mixed well until homogeneous.

**Ex. 2A and 2B -Ultraviolet Curable 1 K Clearcoat**

| Ingredient | Clearcoat 2A | Clearcoat 2B |
|---|---|---|
| Master Solution of Example 2 | 12.8g | 12.8g |
| Experimental oligomer¹ | 7.9g | ------- |
| Ebecryl 8301² | 7.9g | ------- |
| Ebecryl 8402³ | 1.3g | 8.6g |
| SR 399⁴ | ------- | 8.6g |
| Total | 30g | 30g |

| | | |
|---|---|---|
| ¹Experimental oligomer is an aliphatic urethane acrylate from UCB. ²Ebecryl® 8301 is an aliphatic urethane oligomer from UCB ³Ebecryl® 8402 is an aliphatic urethane diacrylate oligomer from UCB. ⁴SR 399 is a penta-functional monomer from Sartomer. | | |

The ingredients of Examples 2A and 2B were each charged to containers and mixed well until homogeneous.

### Polishing evaluation

The following procedure was carried out to demonstrate the polishability of the thin film blend area: Old, cured clearcoated test panels were prepped by polishing with 3M Perfect-It™ III Rubbing Compound and a 3M Perfect-It™ Plus Foam Compounding Pad followed by cleaning with RM® 900 Pre-Kleeno.
The 1K UV curable clearcoats of Example 2 were then applied in two coats using a SATA minijet NR 2000 gravity-feed spraygun, fading out into the panel. Two (2) minute of flash time was given between coats. Immediately after the second coat, the edges of the clearcoat were blended and oversprayed with the Spot Blender of Example 1B using a SATA minijet NR 2000. The coatings were immediately cured under Panacol UV-F 450 with clear filter at 10 inches for 4 minutes. After cooling, the coatings were polished in two (2) applications with Perfect-It III Rubbing Compound using a 3M Perfect-It™ Plus Foam Compounding Pad. Results are set forth in the table below.

**Table 2**

| **Results of Polishing** | |
|---|---|
| **Clearcoat of Example 2A** | **Clearcoat of Example 2B** |
| Pass | Failed |
| No peel-back of edge | Peel-back of edge |
| No hazing of edge | Hazing of edge |

**Example 3**

| **Resin Solutions** | **Example 3A** | **Example 3B** |
|---|---|---|
| Ingredient | Parts by weight | Parts by weight |
| CN 983¹ | 59.3 | ------ |
| Photomer 6019² | ------ | 57.1 |
| N- butyl acetate | 40.7 | 42.9 |
| Total | 100 | 100 |

| | | |
|---|---|---|
| ¹CN 983 is an aliphatic urethane diacrylate. ²Photomer 6019 is an aliphatic urethane acrylate. | | |

The ingredients of Examples 3A and 3B resin solutions were each charged to a container and mixed well until homogeneous.

**Ex. 3C and 3D- Ultraviolet Curable 1K Clearcoats**

| | **Example 3C** | **Example 3D** |
|---|---|---|
| Ingredient | Parts by weight | Parts by weight |
| Resin solution of Example 3A | 95.82 | ------ |
| Resin solution of Example 3B | ------- | 95.97 |
| Byk 325¹ | 0.14 | 0.14 |
| Byk 358² | 0.26 | 0.25 |
| Tego Glide 410³ | 0.07 | 0.07 |
| Irgacure® 184⁴ | 1.90 | 1.83 |
| Irgacure® 819⁵ | 0.39 | 0.37 |
| Tinuvin® 292⁶ | 0.57 | 0.55 |
| Tinuvin® 400⁷ | 0.85 | 0.82 |
| Total | 100 | 100 |

| | | |
|---|---|---|
| ¹Byk 325 is a polysiloxane flow additive from Byk-Chemie. ²Byk 358 is a polyacrylic flow additive from Byk-Chemie. ³TEGO Glide 410 is a polysiloxane flow additive from Degussa. ⁴Irgacure® 184 is free-radical photoinitiator from Ciba Specialty Chemicals. ⁵Irgacure® 819 is free-radical photoinitiator from Ciba Specialty Chemicals. ⁶Tinuvin® 292 is a hindered amine light stabilizer from Ciba Specialty Chemicals. ⁷Tinuvin® 400 is a ultraviolet absorber from Ciba Specialty Chemicals. | | |

The ingredients of Examples 3C and 3D were each charged to a container and mixed well until homogeneous.

### Example 3E - UV Spot Blender

| Ingredient | Parts by weight |
|---|---|
| n-butyl acetate | 38.80 |
| 1-methoxypropyl 2-acetate | 38.57 |
| Xylene | 19.40 |
| Denatured ethanol | 0.20 |
| Baysilon® OL 44¹ | 0.03 |
| Lucirin® TPO-L² | 2.00 |
| Ebecryl 8301³ | 1.00 |
| Total | 100 |

| | |
|---|---|
| ¹Baysilon® OL 44 is polysiloxane flow additive from Borchers. ²Lucirin® TPO-L is a free-radical photoinitiator from BASF. ³Ebecryl® 8301 is an aliphatic urethane oligomer from UCB. | |

### Polishing evaluation

The following procedure was carried out to demonstrate the polishability of the thin film blend area:
Old, cured clearcoated test panels were prepared by cleaning with Glasurit® 541-5 Silicone and Tar Remover then polishing with 3M Perfect-It™ III Extra Cut Rubbing Compound and a 3M Perfect-It™ Plus Foam Compounding Pad. The clearcoats were then cleaned with Glasurit® 700-1 Cleaner.

The 1 K UV curable clearcoats of Examples 3C and 3D were then applied using a SATA minijet NR 2000 gravity-feed spraygun, fading out into the panel. The spot blenders of the Comparative and Example 3E were then applied over the fade-out zones using a SATA minijet NR 2000. This was followed by curing with a Panacol UV-F 900 ultraviolet lamp for four minutes at a distance of nine inches from the lamp.
The cured clearcoats were then polished using 3M Perfect-It™ III Extra Cut Rubbing Compound and a 3M™ Perfect-It™ Plus Foam Compounding Pad. This step was followed by polishing with 3M™ Finessse-It™ Polish - Extra Fine using a 3M™ Perfect-It Foam Polishing Pad. The fade-out zone was then evaluated for peel-back and clarity.

**Table 3**

| **Results following Clearcoat Blender Polishing** | | | |
|---|---|---|---|
| **Example 3C-clearcoat** | | **Example 3D-clearcoat** | |
| Blender Comparative | Blender Example 3E | Blender Comparative | Blender Example 3E |
| Failed | Pass | Failed | Pass |
| Peel-back of edge | No peel-back of edge | Peel-back of edge | No peel-back of edge |
| No hazing of edge. | No hazing of edge | Hazing of edge | No hazing of edge |

## Claims

1. A curable repair coating system comprising
a clearcoat component and blender component, each cured with ultraviolet radiation, wherein the clearcoat component comprises
(a1) 0 to 50% by weight of at least one compound selected from the group consisting of monomers having from one to six free-radically polymerizable groups per molecule having bond activatable by ultraviolet radiation;
(a2) 30 to 80% by weight of at least one compound selected from the group consisting of oligomers and polymers containing carbon-carbon double bonds;
(a3) 0.1 to 10% photoinitiators;
(a4) 0 to 69.9% by weight solvent; and
(a5) 0.1 to 20% by weight additives, where all weights are based on total clearcoat component weight,
and the blender component comprises
(b1) 0 to 5.0% by weight of at least one compound selected from the group consisting of monomers having from one to six free-radically polymerizable groups per molecule;
(b2) 0.5 to 20.0% by weight of at least one compound selected from the group consisting of oligomers and polymers having carbon-carbon double bonds; (b3) 0.1 to 5.0% by weight photoinitiator;
(b4) 24.5 to 98-9% by weight solvent; and
(b5) 0.1 to 2.0% by weight additives;
where all weights are based on total weight of the blender component; and (b6) 0 to 3.0% by weight of nitrocellulose.

2. A repair coating system according to claim 1 wherein the blender component comprises
(b1) 0.1 to 5.0% by weight of at least one compound selected from the group consisting of momomers having from one to six free-radically polymerizable groups per molecule;
(b2) 0.5 to 20.0% by weight of at least one compound selected from the group consisting of oligomers and polymers having carbon-carbon double bonds;
(b3) 0.1 to 5.0% by weight photoinitiator;
(b4) 24.5 to 98.9% by weight solvent; and
(b5) 0.1 to 2.0% by weight additives;
where all weights are based on total weight of the blender component.

3. A repair coating system according to claim 1 wherein the blender component comprises (b6) 0.1 to 3.0% by weight of nitrocellulose.

4. A repair coating system according to claim 2 further comprising (b6) 0.1 to 3.0% by weight of nitrocellulose.

5. A repair coating system according to claim 2 wherein compound (a1) is present in an amount between 0.1 and 50.0% by weight and (a1) and (b1) are selected from the group consisting of octyl-decyl monoacrylate, isobornyl monoacrylate, isodecyl monoacrylate, hexanediol diacrylate, tripropyleneglycol diacrylate, trimethylolpropane triacrylate, alkoxylated trimethylolpropane triacrylate, pentaerythritol triacrylate, pentaerythritol tetraacrylate, pentaerythritol pentaacrylate and dipentaerythritol hexaacrylate, and mixtures thereof, and wherein (a1) and (b1) may be the same or different.

6. A repair coating system according to claim 1 wherein compounds (a2) and (b2) are selected from the group consisting of urethane acrylates, urethane methacrylates, polyester acrylates and methacrylates, acrylic, melamine, acrylic amine, cellulose based acrylates and methacrylates, and unsaturated polyesters and mixtures thereof, and wherein (a2) and (b2) may be the same or different.

7. A repair coating system according to claim 1 wherein the initiator (a3) and/or (b3) is selected from the group consisting of acyl phosphine oxides, benziketals, alpha-hydroxy ketones and mixtures thereof, and wherein (a3) and (b3) may be the same or different.

8. A repair coating system according to claim 1 wherein the blender component comprises
(b1) 0.6 to 6.0% by weight of at least one compound selected from the group consisting of monomers having from one to six free-radically polymerizable groups per molecule;
(b3) 0.1 to 5.0% by weight photoinitiator;
and
(b6) 0.1 to 3.0% by weight of nitrocellulose.

9. A repair coating system according to claim 1 further comprising hydroxyl functional compounds and polyisocyanate compounds.

10. A method of reparing an automotive coating composition comprising
(i) cleaning the damage site and its surroundings,
(ii) sanding and recleaning the damage site,
(iii) optionally, filling, sanding and cleaning the damage site,
(iv) optionally applying at least one of a filler or primer and performing a step selected from the group consisting of flashing off the resultant filler film, curing the filler film and sanding and cleaning the resultant filler coat, and combinations of these
(v) applying a basecoat material to the filler film or filler coat, flashing off the resultant basecoat film, and removing any overspray,
(vi) applying a clearcoat wet-on-wet to the basecoat film,
wherein the clearcoat comprises
(a1) 0 to 50,0% by weight of at least one comprising at least one compound selected from the group consisting of monomers having from one to six free-radically polymerizable groups per molecule having bonds activatable with ultraviolet radiation and mixtures thereof;
(a2) 30 to 80% by weight of at least one compound selected from the group consisting of oligomers and polymers containing carbon-carbon double bonds;
(a3) 0.1 to 10% photoinitiators;
(a4) 0 to 69.9% solvent; and
(a5) 0.1 to 20,0% by weight additives, where all percentages are based on total weight clearcoat,
(vii) applying a spot blender over the clearcoat, wherein the blender comprises
(b1) 0 to 5.0% by weight of at least one compound selected from the group consisting of monomers having from one to six free-radically polymerizable groups per molecule;
(b2) 0.5 to 20% by weight of at least one compound selected from the group consisting of oligomers and polymers having carbon-carbon double bonds;
(b3) 0.1 to 5.0% by weight photoinitiator;
(b4) 24.5 to 98.9% by weight solvent;
(b5) 0.1 to 2.0% by weight additives; and
(b6) 0 to 3.0% by weight of nitrocellulose;
where all weights are based on total weight of the blender composition;
(viii) curing the applied clearcoat and spot blender, wherein the photoinitiator in the blender reacts with carbon-carbon double bonds in the clearcoat.

11. A method according to claim 10 wherein in the clearcoat and blender applied in steps (vi) and (vii) compounds (a1) and (b1) are selected from the group consisting of octyl-decyl monoacrylate, Isobornyl monoacrylate, isodecyl monoacrylate, hexanediol diacrylate, tripropyleneglycol diacrylate, trimethylolpropane triacrylate, alkoxylated trimethylolpropane triacrylate, pentaerythritol triacrylate, pentaerythritol tetraacrylate, pentaerytritol pentaacrylate, dipentaerythritol hexaacrylate, and mixtures thereof, wherein (a1) and (b1) may be the same or different, and (a1) is present in an amount between 0.1 and 50% by weight and (b1) is present in an amount between 0.1 and 5.0% by weight.

12. A method according to claim 10 wherein the clearcoat and blender applied in steps (vi) and (vii) respectively comprises as compounds (a2) and (b2), at least one compound selected from the group consisting of urethane acrylates, urethane methacrylates, polyester acrylates and methacrylates, melamine, acrylic amine, cellulose based acrylates and methacrylates, and unsaturated polyesters and mixtures thereof, wherein (a2) and (b2) may be the same or different.

13. A method according to claim 10 wherein the clearcoat and blender applied in steps (vi) and (vii) respectively comprises as at least one of compounds (a3) and (b3) an initiator selected from the group consisting of acyl phosphine oxides, benziketals, alpha-hydroxy ketones and mixtures thereof, wherein (a3) and (b3) may be the same or different.

14. A method according to claim 10 wherein the coating composition is additionally cured by thermal means.

## Patentansprüche

1. Härtbares Reparaturlacksystem, enthaltend eine Klarlackkomponente und eine Blenderkomponente, die jeweils mit ultravioletter Strahlung gehärtet werden,
wobei die Klarlackkomponente
(a1) 0 bis 50 Gew.-% mindestens einer Verbindung aus der Gruppe bestehend aus Monomeren mit einer bis sechs radikalisch polymerisierbaren Gruppen pro Molekül mit durch ultraviolette Strahlung aktivierbaren Bindungen;
(a2) 30 bis 80 Gew.-% mindestens einer Verbindung aus der Gruppe bestehend aus Oligomeren und Polymeren mit Kohlenstoff-Kohlenstoff-Doppelbindungen;
(a3) 0,1 bis 10% Photoinitiatoren;
(a4) 0 bis 69,9 Gew.-% Lösungsmittel und
(a5) 0,1 bis 20 Gew.-% Additive enthält, wobei sich alle Gewichtsangaben auf das Gesamtgewicht der Klarlackkomponente beziehen,
und die Blenderkomponente
(b1) 0 bis 5,0 Gew.-% mindestens einer Verbindung aus der Gruppe bestehend aus Monomeren mit einer bis sechs radikalisch polymerisierbaren Gruppen pro Molekül;
(b2) 0,5 bis 20,0 Gew.-% mindestens einer Verbindung aus der Gruppe bestehend aus Oligomeren und Polymeren mit Kohlenstoff-Kohlenstoff-Doppelbindungen;
(b3) 0,1 bis 5,0 Gew.-% Photoinitiator;
(b4) 24,5 bis 98,9 Gew.-% Lösungsmittel und
(b5) 0,1 bis 2,0 Gew.-% Additive;
wobei sich alle Gewichtsangaben auf das Gesamtgewicht der Blenderkomponente beziehen, und
(b6) 0 bis 3,0 Gew.-% Nitrocellulose enthält.

2. Reparaturlacksystem nach Anspruch 1, wobei die Blenderkomponente
(b1) 0,1 bis 5,0 Gew.-% mindestens einer Verbindung aus der Gruppe bestehend aus Monomeren mit einer bis sechs radikalisch polymerisierbaren Gruppen pro Molekül;
(b2) 0,5 bis 20,0 Gew.-% mindestens einer Verbindung aus der Gruppe bestehend aus Oligomeren und Polymeren mit Kohlenstoff-Kohlenstoff-Doppelbindungen;
(b3) 0,1 bis 5,0 Gew.-% Photoinitiator;
(b4) 24,5 bis 98,9 Gew.-% Lösungsmittel und
(b5) 0,1 bis 2,0 Gew.-% Additive;
enthält, wobei sich alle Gewichtsangaben auf das Gesamtgewicht der Blenderkomponente beziehen.

3. Reparaturlacksystem nach Anspruch 1, wobei die Blenderkomponente (b6) 0,1 bis 3,0 Gew.-% Nitrocellulose enthält.

4. Reparaturlacksystem nach Anspruch 2, das ferner (b6) 0,1 bis 3,0 Gew.-% Nitrocellulose enthält.

5. Reparaturlacksystem nach Anspruch 2, wobei Verbindung (a1) in einer Menge zwischen 0,1 und 50,0 Gew.-% vorliegt und (a1) und (b1) aus der Gruppe bestehend aus Octyldecylmonoacrylat, Isobornylmonoacrylat, Isodecylmonoacrylat, Hexandioldiacrylat, Tripropylenglykoldiacrylat, Trimethylolpropantriacrylat, alkoxyliertem Trimethylolpropantriacrylat, Pentaerythrittriacrylat, Pentaerythrittetraacrylat, Pentaerythritpentaacrylat und Dipentaerythrithexaacrylat und Mischungen davon ausgewählt sind und (a1) und (b1) gleich oder verschieden sein können.

6. Reparaturlacksystem nach Anspruch 1, wobei die Verbindungen (a2) und (b2) aus der Gruppe bestehend aus Urethanacrylaten, Urethanmethacrylaten, Polyesteracrylaten und -methacrylaten, Acryl, Melamin, Acrylamin, auf Cellulose basierenden Acrylaten und Methacrylaten und ungesättigten Polyestern und Mischungen davon ausgewählt sind und (a2) und (b2) gleich oder verschieden sein können.

7. Reparaturlacksystem nach Anspruch 1, wobei der Initiator (a3) und/oder (b3) aus der Gruppe bestehend aus Acylphosphinoxiden, Benzilketalen, alpha-Hydroxyketonen und Mischungen davon ausgewählt ist und (a3) und (b3) gleich oder verschieden sein können.

8. Reparaturlacksystem nach Anspruch 1, wobei die Blenderkomponente
(b1) 0,5 bis 5,0 Gew.-% mindestens einer Verbindung aus der Gruppe bestehend aus Monomeren mit einer bis sechs radikalisch polymerisierbaren Gruppen pro Molekül;
(b3) 0,1 bis 5,0 Gew.-% Photoinitiator
und
(b6) 0,1 bis 3,0 Gew.-% Nitrocellulose enthält.

9. Reparaturlacksystem nach Anspruch 1, das ferner hydroxylfunktionelle Verbindungen und Polyisocyanatverbindungen enthält.

10. Verfahren zur Reparatur eines Autolacks, umfassend die Schritte
(i) Reinigung der Schadstelle und ihrer Umgebung,
(ii) Schleifen und erneute Reinigung der Schadstelle,
(iii) gegebenenfalls Spachteln, Schleifen und Reinigen der Schadstelle,
(iv) gegebenenfalls Aufbringen mindestens eines Füllers oder Primers und Durchführung eines Schritts aus der Gruppe bestehend aus Ablüften der resultierenden Füllerschicht, Härten der Füllerschicht und Schleifen und Reinigen der resultierenden Füllerlackierung und Kombinationen davon,
(v) Aufbringen eines Basislacks auf der Füllerschicht oder der Füllerlackierung, Ablüften der resultierenden Basislackschicht und gegebenenfalls Entfernen des Overspray,
(vi) Nass-in-nass-Aufbringen eines Klarlacks auf der Basislackschicht,
wobei der Klarlack
(a1) 0 bis 50,0 Gew.-% mindestens einer Verbindung aus der Gruppe bestehend aus Monomeren mit einer bis sechs radikalisch polymerisierbaren Gruppen pro Molekül mit durch ultraviolette Strahlung aktivierbaren Bindungen und Mischungen davon;
(a2) 30 bis 80 Gew.-% mindestens einer Verbindung aus der Gruppe bestehend aus Oligomeren und Polymeren mit Kohlenstoff-Kohlenstoff-Doppelbindungen;
(a3) 0,1 bis 10% Photoinitiatoren;
(a4) 0 bis 69,9 Gew.-% Lösungsmittel und
(a5) 0,1 bis 20,0 Gew.-% Additive, wobei sich alle Gewichtsangaben auf das Gesamtgewicht des Klarlacks beziehen,
enthält,
(vii) Aufbringen eines Spotblenders über dem Klarlack, wobei der Blender
(b1) 0 bis 5,0 Gew.-% mindestens einer Verbindung aus der Gruppe bestehend aus Monomeren mit einer bis sechs radikalisch polymerisierbaren Gruppen pro Molekül;
(b2) 0,5 bis 20 Gew.-% mindestens einer Verbindung aus der Gruppe bestehend aus Oligomeren und Polymeren mit Kohlenstoff-Kohlenstoff-Doppelbindungen;
(b3) 0,1 bis 5,0 Gew.-% Photoinitiator;
(b4) 24,5 bis 98,9 Gew.-% Lösungsmittel;
(b5) 0,1 bis 2,0 Gew.-% Additive; und
(b6) 0 bis 3,0 Gew.-% Nitrocellulose enthält, wobei sich alle Gewichtsangaben auf das Gesamtgewicht der Blenderzusammensetzung beziehen;
(viii) Härten des aufgebrachten Klarlacks und Spotblenders, wobei der Photoinitiator in dem Blender mit Kohlenstoff-Kohlenstoff-Doppelbindungen im Klarlack reagiert.

11. Verfahren nach Anspruch 10, bei dem man in dem in den Schritten (vi) und (vii) aufgebrachten Klarlack und Blender die Verbindungen (a1) und (b1) aus der Gruppe bestehend aus Octyldecylmonoacrylat, Isobornylmonoacrylat, Isodecylmonoacrylat, Hexandioldiacrylat, Tripropylenglykoldiacrylat, Trimethylolpropantriacrylat, alkoxyliertem Trimethylolpropantriacrylat, Pentaerythrittriacrylat, Pentaerythrittetraacrylat, Pentaerythritpentaacrylat und Dipentaerythrithexaacrylat und Mischungen davon auswählt, wobei (a1) und (b1) gleich oder verschieden sein können, und (a1) in einer Menge zwischen 0,1 und 50 Gew.-% vorliegt und (b1) in einer Menge zwischen 0,1 und 5,0 Gew.-% vorliegt.

12. Verfahren nach Anspruch 10, bei dem der in den Schritten (vi) und (vii) aufgebrachte Klarlack bzw. Blender als Verbindungen (a2) und (b2) mindestens eine Verbindung aus der Gruppe bestehend aus Urethanacrylaten, Urethanmethacrylaten, Polyesteracrylaten und -methacrylaten, Melamin, Acrylamin, auf Cellulose basierenden Acrylaten und Methacrylaten und ungesättigten Polyestern und Mischungen davon enthält, wobei (a2) und (b2) gleich oder verschieden sein können.

13. Verfahren nach Anspruch 10, bei dem der in den Schritten (vi) und (vii) aufgebrachte Klarlack bzw. Blender als mindestens eine der Verbindungen (a3) und (b3) einen Initiator aus der Gruppe bestehend aus Acylphosphinoxiden, Benzilketalen, alpha-Hydroxyketonen und Mischungen davon enthält, wobei (a3) und (b3) gleich oder verschieden sein können.

14. Verfahren nach Anspruch 10, bei dem man den Lack zusätzlich mit thermischen Mitteln härtet.

## Revendications

1. Système d'enduit de réparation durcissable comprenant
un composant d'enduit lustré et un composant de diluant raccord, chacun durci avec un rayonnement ultraviolet, dans lequel le composant d'enduit lustré comprend
(a1) 0 à 50 % en poids d'au moins un composé choisi dans le groupe constitué par les monomères portant un à six groupes polymérisables par voie radicalaire par molécule contenant une liaison activable par rayonnement ultraviolet ;
(a2) 30 à 80 % en poids d'au moins un composé choisi dans le groupe constitué par les oligomères et polymères contenant des doubles liaisons carbone-carbone ;
(a3) 0,1 à 10 % de photoinitiateurs ;
(a4) 0 à 69,9 % en poids de solvant ; et
(a5) 0,1 à 20 % en poids d'additifs,
tous les poids étant basés sur le poids total du composant d'enduit lustré,
et le composant de diluant raccord comprend
(b1) 0 à 5,0 % en poids d'au moins un composé choisi dans le groupe constitué par les monomères portant un à six groupes polymérisables par voie radicalaire par molécule ;
(b2) 0,5 à 20,0 % en poids d'au moins un composé choisi dans le groupe constitué par les oligomères et polymères contenant des doubles liaisons carbone-carbone ;
(b3) 0,1 à 5,0 % en poids de photoinitiateur ;
(b4) 24,5 à 98,9 % en poids de solvant ; et
(b5) 0,1 à 2,0 % en poids d'additifs,
tous les poids étant basés sur le poids total du composant de diluant raccord ; et
(b6) 0 à 3,0 % en poids de nitrocellulose.

2. Système d'enduit de réparation selon la revendication 1 dans lequel le composant de diluant raccord comprend
(b1) 0,1 à 5,0 % en poids d'au moins un composé choisi dans le groupe constitué par les monomères portant un à six groupes polymérisables par voie radicalaire par molécule ;
(b2) 0,5 à 20,0 % en poids d'au moins un composé choisi dans le groupe constitué par les oligomères et polymères contenant des doubles liaisons carbone-carbone ;
(b3) 0,1 à 5,0 % en poids de photoinitiateur ;
(b4) 24,5 à 98,9 % en poids de solvant ; et
(b5) 0,1 à 2,0 % en poids d'additifs,
tous les poids étant basés sur le poids total du composant de diluant raccord.

3. Système d'enduit de réparation selon la revendication 1 dans lequel le composant de diluant raccord comprend (b6) 0,1 à 3,0 % en poids de nitrocellulose.

4. Système d'enduit de réparation selon la revendication 2 comprenant en outre (b6) 0,1 à 3,0 % en poids de nitrocellulose.

5. Système d'enduit de réparation selon la revendication 2 dans lequel le composé (a1) est présent dans une quantité comprise entre 0,1 et 50,0 % en poids, et (a1) et (b1) sont choisis dans le groupe constitué par le monoacrylate d'octyl-décyle, le monoacrylate d'isobornyle, le monoacrylate d'isodécyle, le diacrylate d'hexanediol, le diacrylate de tripropylène glycol, le triacrylate de triméthylolpropane, le triacrylate de triméthylolpropane alcoxylé, le triacrylate de pentaérythritol, le tétraacrylate de pentaérythritol, le pentaacrylate de pentaérythritol, l'hexaacrylate de pentaérythritol, et les mélanges de ceux-ci, (a1) et (b1) pouvant être identiques ou différents.

6. Système d'enduit de réparation selon la revendication 1 dans lequel les composés (a2) et (b2) sont choisis dans le groupe constitué par les acrylates d'uréthane, les méthacrylates d'uréthane, les acrylates et méthacrylates de polyester, les résines acryliques, les résines de mélamine, les amines acryliques, les acrylates et méthacrylates à base de cellulose, les polyesters insaturés, et les mélanges de ceux-ci, (a2) et (b2) pouvant être identiques ou différents.

7. Système d'enduit de réparation selon la revendication 1 dans lequel l'initiateur (a3) et/ou (b3) est choisi dans le groupe constitué par les oxydes d'acylphosphine, les benzylcétals, les alpha-hydroxycétones, et les mélanges de ceux-ci, (a3) et (b3) pouvant être identiques ou différents.

8. Système d'enduit de réparation selon la revendication 1 dans lequel le composant de diluant raccord comprend (b1) 0,5 à 5,0 % en poids d'au moins un composé choisi dans le groupe constitué par les monomères portant un à six groupes polymérisables par voie radicalaire par molécule ;
(b3) 0,1 à 5,0 % en poids de photoinitiateur ; et
(b6) 0,1 à 3,0 % en poids de nitrocellulose.

9. Système d'enduit de réparation selon la revendication 1 comprenant en outre des composés à fonctionnalité hydroxyle et des composés de polyisocyanate.

10. Procédé de réparation d'une composition d'enduit d'automobile comprenant
(i) le nettoyage du site endommagé et de ses abords,
(ii) le sablage et le renettoyage du site endommagé,
(iii) éventuellement, le remplissage, le sablage et le nettoyage du site endommagé,
(iv) éventuellement, l'application d'une charge et/ou d'un primaire et l'exécution d'une étape choisie dans le groupe constitué par le séchage superficiel du film de charge résultant, le durcissement du film de charge et le sablage et le nettoyage de l'enduit de charge résultant, et leurs combinaisons,
(v) l'application d'un matériau de fond au film de charge ou à l'enduit de charge, le séchage superficiel du film de fond résultant, et le retrait de tout excès de projection,
(vi) l'application humide sur humide d'un enduit lustré au film de fond,
l'enduit lustré comprenant
(a1) 0 à 50,0 % en poids d'au moins un composé choisi dans le groupe constitué par les monomères portant un à six groupes polymérisables par voie radicalaire par molécule contenant des liaisons activables par rayonnement ultraviolet et les mélanges de ceux-ci ;
(a2) 30 à 80 % en poids d'au moins un composé choisi dans le groupe constitué par les oligomères et polymères contenant des doubles liaisons carbone-carbone ;
(a3) 0,1 à 10 % de photoinitiateurs ;
(a4) 0 à 69,9 % de solvant ; et
(a5) 0,1 à 20 % en poids d'additifs,
tous les pourcentages étant basés sur le poids total de l'enduit lustré,
(vii) l'application d'un diluant raccord sur l'enduit lustré,
le diluant raccord comprenant
(b1) 0 à 5,0 % en poids d'au moins un composé choisi dans le groupe constitué par les monomères portant un à six groupes polymérisables par voie radicalaire par molécule ;
(b2) 0,5 à 20 % en poids d'au moins un composé choisi dans le groupe constitué par les oligomères et polymères contenant des doubles liaisons carbone-carbone ;
(b3) 0,1 à 5,0 % en poids de photoinitiateur ;
(b4) 24,5 à 98,9 % en poids de solvant ;
(b5) 0,1 à 2,0 % en poids d'additifs ; et
(b6) 0 à 3,0 % en poids de nitrocellulose,
tous les poids étant basés sur le poids total de la composition de diluant raccord, et
(viii) le durcissement de l'enduit lustré et du diluant raccord appliqués, le photoinitiateur dans le diluant raccord réagissant avec les doubles liaisons carbone-carbone dans l'enduit lustré.

11. Procédé selon la revendication 10 dans lequel, dans l'enduit lustré et le diluant raccord appliqués aux étapes (vi) et (vii), les composés (a1) et (b1) sont choisis dans le groupe constitué par le monoacrylate d'octyl-décyle, le monoacrylate d'isobornyle, le monoacrylate d'isodécyle, le diacrylate d'hexanediol, le diacrylate de tripropylène glycol, le triacrylate de triméthylolpropane, le triacrylate de triméthylolpropane alcoxylé, le triacrylate de pentaérythritol, le tétraacrylate de pentaérythritol, le pentaacrylate de pentaérythritol, l'hexaacrylate de pentaérythritol, et les mélanges de ceux-ci, (a1) et (b1) pouvant être identiques ou différents, et (a1) est présent dans une quantité comprise entre 0,1 et 50 % en poids et (b1) est présent dans une quantité comprise entre 0,1 et 5,0 % en poids.

12. Procédé selon la revendication 10 dans lequel l'enduit lustré et le diluant raccord appliqués aux étapes (vi) et (vii) comprennent respectivement comme composés (a2) et (b2) au moins un composé choisi dans le groupe constitué par les acrylates d'uréthane, les méthacrylates d'uréthane, les acrylates et méthacrylates de polyester, les résines de mélamine, les amines acryliques, les acrylates et méthacrylates à base de cellulose, les polyesters insaturés, et les mélanges de ceux-ci, (a2) et (b2) pouvant être identiques ou différents.

13. Procédé selon la revendication 10 dans lequel l'enduit lustré et le diluant raccord appliqués aux étapes (vi) et (vii) comprennent respectivement comme l'un au moins des composés (a3) et (b3) un initiateur choisi dans le groupe constitué par les oxydes d'acylphosphine, les benzylcétals, les alpha-hydroxycétones, et les mélanges de ceux-ci, (a3) et (b3) pouvant être identiques ou différents.

14. Procédé selon la revendication 10 dans lequel la composition d'enduit est également durcie par un moyen thermique.
